# DEMANDE DE BREVET EUROPEEN

(11) **EP 4 293 262 A1**
(43) Date de publication de la demande: **20.12.2023**
(21) Numéro de dépôt: 23179109.6
(22) Date de dépôt: 14.06.2023
(51) Int. Cl.: F16K 31/53, F16K 31/04

(54) **ACTIONNEUR D'UN ÉQUIPEMENT ÉLECTRIQUE DE RÉGULATION**

(30) Priorité: 17.06.2022 FR 2205954
(71) Demandeur: Liebherr-Aerospace Toulouse SAS, 31016 Toulouse Cedex 2 (FR)
(72) Inventeur: LAFOND, Eric, 31016 TOULOUSE CEDEX 2 (FR); WOJCIESZONAK, Rémi, 31016 TOULOUSE CEDEX 2 (FR)
(74) Mandataire: Bringer IP

(57) **Abrégé**

L'invention concerne un actionneur d'un équipement électrique de régulation d'un flux de fluide dans une conduite comprenant un carter, un moteur électrique (10), un réducteur réversible épicycloïdal concentrique logé dans ledit carter et relié mécaniquement audit moteur et comprenant un premier étage de réduction et un deuxième étage de réduction comprenant au moins un satellite (31) à double dentures externes superposées, lesdites dentures hautes étant en prise avec une couronne fixe et lesdites dentures basses étant en prise avec une couronne mobile (35) , et un ressort de torsion (42) concentrique agencé autour de ladite couronne mobile (35), relié mécaniquement au carter et à la couronne mobile (35) , et configuré pour pouvoir entraîner spontanément le déplacement de ladite couronne mobile (35) et d'un arbre de sortie (40) dans une position prédéterminée en cas de perte d'alimentation électrique dudit moteur électrique (10).

## Description

### Domaine technique de l'invention

L'invention concerne un actionneur d'un équipement électrique de régulation d'un flux de fluide dans une conduite, du type vanne de régulation, équipé d'un organe de régulation, du type papillon, dont la position au sein de la conduite détermine le débit et/ou la pression et/ou la température du flux de fluide circulant dans cette conduite.

### Arrière-plan technologique

Un aéronef comprend différents types de systèmes de fluide, tel que des systèmes d'air ou des systèmes à cycle vapeur.

Un système d'air comprend en général une pluralité de conduites d'air et une pluralité de vannes de régulation du flux d'air dans les conduites pour véhiculer l'air depuis des sources d'air vers des équipements consommateurs d'air.

A titre d'exemple non limitatif, un tel système d'air est par exemple un système de conditionnement d'air d'une cabine de l'aéronef. Un tel système de conditionnement d'air d'une cabine d'aéronef (aussi désigné par la terminologie de « pack de conditionnement d'air ») comprend en général un dispositif de prélèvement d'un air comprimé, plus connu sous la dénomination anglaise d'air « bleed », sur au moins un compresseur d'un moteur de l'aéronef (tel que par exemple un moteur propulsif ou un moteur auxiliaire de l'aéronef), une turbomachine à cycle à air, des échangeurs de chaleur, un réseau de conduites comprenant des vannes de régulation du flux d'air, et un calculateur central configuré pour pouvoir commander les ouvertures/fermetures des vannes de régulation en fonction des conditions de vol de l'aéronef.

Les vannes de régulation peuvent être, selon les systèmes d'air, des vannes pneumatiques, électropneumatiques ou électriques.

Les vannes électriques ou électropneumatiques d'un tel système d'air comprennent en général un organe d'obturation tel qu'un papillon monté sur un axe perpendiculaire au flux d'air circulant dans la conduite d'air dans laquelle il est agencé. Ce papillon est relié mécaniquement à un réducteur mécanique, entrainé par un moteur électrique tel qu'un moteur à balai ou un moteur pas à pas.

Ces vannes de régulation ou de distribution d'air sont utilisées pour le cloisonnement de sous-systèmes et/ou pour la régulation de débit, pression et température de l'air du système.

Il est parfois nécessaire que ces vannes puissent présenter une position (ouverte, fermée ou intermédiaire) préférentielle. Cette fonctionnalité est connue sous la dénomination anglaise de fonctionnalité « *fail safe* ».

Les inventeurs ont cherché à proposer un équipement électrique de régulation d'air, telle qu'une vanne de régulation, qui soit doté d'une fonctionnalité de retour en une position préférentielle en cas de perte d'alimentation électrique du moteur. En d'autres termes, les inventeurs ont cherché à doter un équipement de régulation électrique d'une fonctionnalité « *fail safe* ».

### Objectifs de l'invention

L'invention vise à fournir un actionneur d'un équipement électrique de régulation d'un flux de fluide dans une conduite, du type vanne de régulation, équipé d'un organe de régulation, du type papillon, qui présente une fonctionnalité de retour en une position préférentielle en cas de perte d'alimentation électrique.

L'invention vise également à fournir, dans au moins un mode de réalisation, un tel équipement qui soit facile à assembler.

L'invention vise également à fournir, dans au moins un mode de réalisation, un tel équipement qui présente un encombrement limité.

L'invention vise également à fournir, dans au moins un mode de réalisation, un tel équipement qui puisse présenter au moins deux modes de fonctionnement distincts.

L'invention vise aussi à fournir un équipement électrique de régulation équipé d'un actionneur selon l'invention.

### Exposé de l'invention

Pour ce faire, l'invention concerne un actionneur d'un équipement électrique de régulation d'un flux de fluide dans une conduite, du type vanne de régulation, équipé d'un organe de régulation, du type papillon, dont la position au sein de la conduite détermine au moins un paramètre du flux de fluide circulant d'amont en aval de l'organe de régulation, ledit actionneur comprenant un carter et un moteur électrique muni d'un arbre moteur adapté pour être mis en rotation lors de l'alimentation du moteur en énergie électrique.

L'actionneur selon l'invention est caractérisé en ce qu'il comprend en outre :
- un réducteur réversible épicycloïdal concentrique logé dans ledit carter et relié mécaniquement audit arbre moteur et comprenant un premier étage de réduction comprenant un pignon solaire solidaire d'une roue dentée entrainée en rotation par ledit arbre moteur et engrenant un deuxième étage de réduction comprenant au moins un satellite à double dentures externes superposées, dites respectivement denture haute et denture basse, ladite denture haute de chaque satellite étant engrenée par ledit pignon solaire et en prise avec une couronne fixe à denture interne solidaire dudit carter et ladite denture basse de chaque satellite étant en prise avec une couronne mobile à denture interne solidaire d'un arbre de sortie, relié mécaniquement audit organe de régulation,
- un ressort de torsion concentrique agencé autour de ladite couronne mobile, relié mécaniquement au carter et à la couronne mobile, et configuré pour pouvoir entrainer spontanément le déplacement de ladite couronne mobile et dudit arbre de sortie dans une position prédéterminée en cas de perte d'alimentation électrique dudit moteur électrique.

L'actionneur selon l'invention présente la particularité de pouvoir basculer spontanément l'arbre de sortie du réducteur dans une position prédéterminée lors de la perte d'alimentation électrique du moteur. En effet, le ressort de torsion concentrique monté entre la couronne mobile et le carter exerce un couple de rappel sur la couronne mobile qui porte l'arbre de sortie. Lorsque le moteur est alimenté en énergie électrique, le couple produit par le moteur et transmis à l'arbre de sortie par l'intermédiaire des premier et deuxième étages de réduction est supérieur au couple de rappel du ressort et permet donc de déterminer la position de l'organe de régulation relié mécaniquement à l'arbre de sortie. Lorsque le moteur électrique perd l'alimentation électrique, le couple produit par ce dernier est nul et le couple produit par le ressort de rappel entraine alors la couronne mobile et l'arbre de sortie dans la position déterminée par le ressort de rappel.

L'actionneur selon l'invention présente aussi la particularité de mettre en oeuvre un réducteur épicycloïdal concentrique qui permet de loger le ressort de rappel autour du réducteur, ce qui limite son encombrement.

L'intégration du ressort autour de la couronne mobile est permise par la configuration épicycloïdale du réducteur. En particulier, l'architecture particulière du réducteur de l'actionneur selon l'invention permet d'utiliser un ressort de grand diamètre, ce qui apporte une flexibilité et le couple nécessaire sur une course de l'ordre de 90°, tout en garantissant le logement des différents éléments dans le carter.

En outre, les différentes pièces de l'actionneur s'empilent les unes sur les autres, ce qui concourt à faciliter l'assemblage de l'actionneur selon l'invention. Cette facilitée d'assemblage concourt ainsi à réduire les coûts de fabrication d'un actionneur selon l'invention.

En outre, la réduction totale de l'actionneur dépend en partie de l'entraxe entre le moteur et l'axe de mise en rotation de la roue dentée qui peut coïncider avec l'axe de l'arbre de sortie. Aussi, il est possible de modifier la réduction totale en modifiant cet entraxe. En d'autres termes, l'invention permet de modifier la réduction totale de l'actionneur sans modifier l'étage épicycloïdal du réducteur.

L'équipement électrique de régulation équipé par l'actionneur selon l'invention peut être de tous types. Il peut s'agir d'une vanne électrique, d'un compresseur, d'un ventilateur, etc. Dans toute la suite, on évoque essentiellement la vanne électrique de régulation, étant entendu que l'invention ne se limite pas aux seules vannes électriques de régulation. L'homme du métier comprendra aisément que les enseignements s'appliquent *mutatis mutandis* à tout équipement électrique de régulation. A noter également qu'un équipement électrique selon l'invention peut remplacer des vannes de régulation électropneumatiques.

Le paramètre du flux de fluide déterminé par l'organe de régulation de l'équipement de régulation peut ainsi être la température, le débit et/ou la pression du flux de fluide circulant d'amont en aval de l'organe de régulation.

Avantageusement et selon l'invention, ledit deuxième étage de réduction comprend trois satellites à double dentures superposées dont les dentures hautes sont engrenées par ledit pignon solaire dudit premier étage de réduction.

Selon cet aspect de l'invention, le réducteur comprend trois satellites qui s'autocentrent sur la couronne fixe en regard de la denture haute des satellites. Cela permet d'obtenir un premier étage équilibré tout en facilitant les opérations d'assemblage.

Avantageusement et selon l'invention, le réducteur comprend en outre un pignon solaire libre en prise avec les dentures basses des satellites de manière à pouvoir maintenir la position engrenée des trois satellites dans ladite couronne mobile.

Selon cet aspect de l'invention, les trois satellites peuvent rester engrenés dans la couronne mobile, y compris lorsque le couple s'accroit. Le pignon libre est monté libre en rotation autour de l'arbre de sortie.

Avantageusement et selon l'invention, ledit moteur électrique comprend une vis sans fin formée par une partie de l'arbre moteur, engrenée dans ladite roue dentée dudit premier étage de réduction.

Selon cet aspect de l'invention, l'arbre moteur porte directement une vis sans fin qui fait office de moyen d'engrènement de la roue dentée du premier étage de réduction, ainsi que de palier du moteur.

Avantageusement et selon l'invention, l'actionneur comprend en outre un deuxième moteur électrique et ledit premier étage de réduction comprend une deuxième roue dentée portant au moins un pignon en prise avec ledit pignon solaire, ladite roue étant entrainé en rotation par ledit deuxième moteur électrique pour former un deuxième mode de réduction.

Selon cet aspect de l'invention, l'actionneur comprend un différentiel monté sur l'arbre de sortie et qui entraine l'étage épicycloïdal, par exemple par une noix en croix. Ce différentiel est formé par les première et deuxième roues dentées du premier étage de réduction. Ce différentiel permet ainsi de former deux modes de fonctionnement différents (selon le moteur électrique qui entraine le réducteur) et d'obtenir une réduction différente sur chaque mode.

Avantageusement et selon l'invention, l'actionneur comprend en outre:
- une carte électronique de commande équipée d'au moins un port d'entrée destiné à recevoir des données de pilotage dudit équipement,
- un logiciel embarqué sur ladite carte électronique de commande et configuré pour pouvoir déterminer des instructions de commande du moteur électrique à partir de données reçues sur ledit port d'entrée.

Selon cet aspect de l'invention, l'actionneur embarque directement une carte électronique configurée pour permettre de piloter le(s) moteur(s) électrique(s) de l'actionneur.

Ainsi, un système d'air comprenant un équipement électrique de régulation équipé d'un actionneur selon l'invention, peut déporter le contrôle des moteurs de chaque équipement directement dans chaque équipement. Il n'est plus nécessaire avec un tel équipement de piloter l'équipement à partir d'un calculateur central.

L'invention concerne également un équipement électrique de régulation d'un flux de fluide dans une conduite, du type vanne de régulation, caractérisé en ce qu'il comprend un actionneur selon l'invention.

Les avantages et effets techniques de l'actionneur selon l'invention s'appliquent *mutatis mutandis* à un équipement selon l'invention.

L'invention concerne également un actionneur selon l'invention et un équipement électrique selon l'invention, caractérisés en combinaison par tout ou partie des caractéristiques mentionnées ci-dessus ou ci-après.

### Liste des figures

D'autres buts, caractéristiques et avantages de l'invention apparaîtront à la lecture de la description suivante donnée à titre uniquement non limitatif et qui se réfère aux figures annexées dans lesquelles :
[Fig. 1] est une vue schématique en perspective d'un actionneur selon un mode de réalisation de l'invention sur laquelle le carter n'est pas représenté,
[Fig. 2] est une vue schématique en perspective du deuxième étage de réduction du réducteur de l'actionneur de la figure 1,
[Fig. 3] est une vue schématique en perspective d'un satellite à double dentures du deuxième étage de réduction de la figure 2,

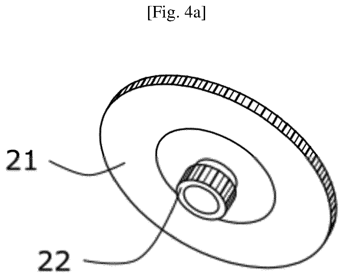

[Fig. 4a] est une vue schématique du premier étage de réduction de l'actionneur de la figure 1 en vue de dessous,

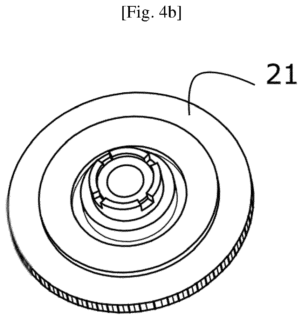

[Fig. 4b] est une vue schématique du premier étage de réduction de l'actionneur de la figure 1 en vue de dessus
[Fig. 5] est une vue schématique en perspective de l'actionneur de la figure 1 sur laquelle le carter extérieur est représenté,
[Fig. 6] est une vue schématique en perspective éclatée d'un actionneur selon un autre mode de réalisation de l'invention.

### Description détaillée d'un mode de réalisation de l'invention

Sur les figures, les échelles et les proportions ne sont pas strictement respectées et ce, à des fins d'illustration et de clarté. En outre, les éléments identiques, similaires ou analogues sont désignés par les mêmes références dans toutes les figures.

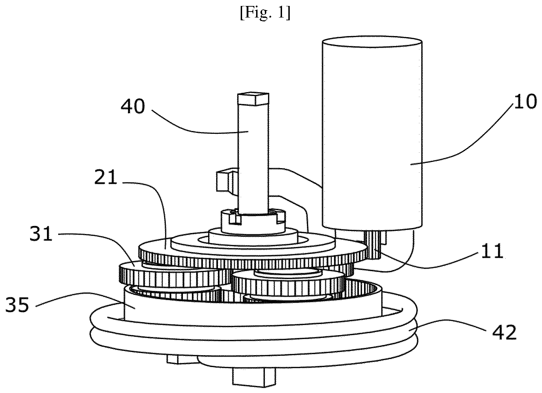

Dans toute la description qui suit, les différents éléments de l'actionneur sont décrits tels qu'agencés lorsque l'actionneur est assemblé et orienté de sorte que l'arbre de sortie s'étende verticalement vers le haut. Cet agencement est représenté notamment sur la figure 1.

La figure 1 illustre un actionneur selon un mode de réalisation de l'invention comprenant un moteur électrique 10 présentant un arbre moteur sur lequel est monté un pignon moteur 11. Ce pignon moteur 11 est engrené dans une roue dentée 21. Cette roue dentée 21 est solidaire d'un pignon solaire 22 logé en son centre et mobile en rotation autour de l'arbre de sortie 40. La roue dentée 21 et le pignon solaire 22 forme le premier étage de réduction du réducteur de l'actionneur. La roue dentée 21 est par exemple formée en aluminium alors que le pignon solaire 22 est par exemple formé en acier nitruré. Bien évidemment, d'autres matériaux peuvent être utilisés pour former les composants du premier étage en fonction des exigences de l'utilisation de l'actionneur.

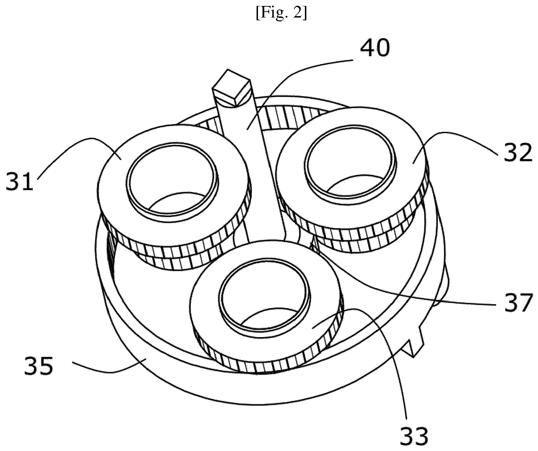

Le pignon solaire 22 engrène un deuxième étage de réduction, illustrée schématiquement par la figure 2.

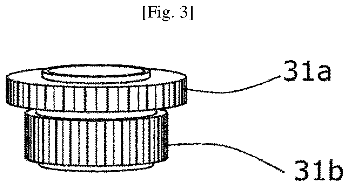

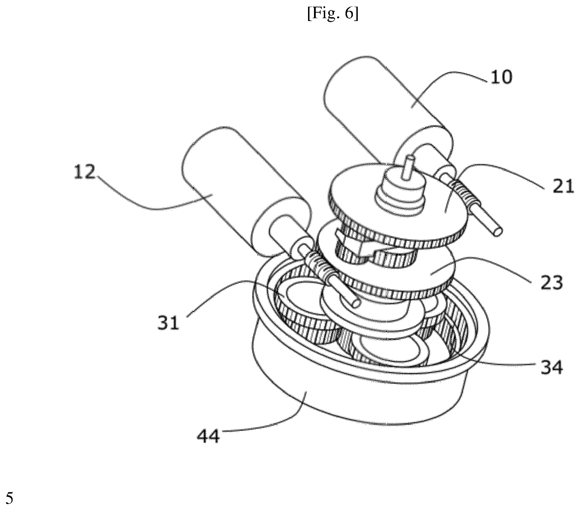

Ce deuxième étage de réduction est formé de trois satellites 31, 32, 33 comprenant chaque des dentures hautes et des dentures basses. La figure 3 illustre schématiquement le satellite 31 comprenant une denture haute 31a et une denture basse 31b. Les dentures hautes des trois satellites 31, 32, 32 sont engrenées par le pignon solaire 22, et en prises avec une couronne fixe 34 à denture interne solidaire du carter. Cette couronne fixe 34 est représentée schématiquement sur la figure 6. Les dentures basses des trois satellites 31, 32, 33 engrènent la denture interne d'une couronne mobile 35 et un pignon solaire libre 37 mobile en rotation autour de l'arbre de sortie 40.

L'arbre de sortie 40 est solidaire de la couronne mobile 35. L'arbre de sortie 40 est relié mécaniquement à l'organe de régulation, tel qu'un papillon, non représenté sur les figures.

En outre, l'actionneur comprend un ressort de torsion 42 concentrique agencé autour de la couronne mobile 35 et relié mécaniquement au carter 44 et à la couronne mobile 35. Pour ce faire, le carter comprend au moins une encoche 45 dans laquelle est insérée une première extrémité du ressort de torsion 42 et la couronne mobile 35 comprend une encoche 46 dans laquelle est agencée la deuxième extrémité du ressort de torsion 42. Le ressort 42 est agencé autour de la couronne mobile 35 et s'étende la première extrémité à la deuxième extrémité.

Un actionneur selon l'invention peut être dimensionné pour différentes puissances et suivant les applications visées. A titre d'exemple, l'actionneur est dimensionné pour pouvoir fournir un couple de 20N/m à une vitesse de 50°/s sur toute la plage de 90° de pivotement de l'organe de régulation. Le ressort de torsion est choisi pour présenter une raideur permettant de fournir le couple de réversibilité visé.

Ce ressort peut par exemple être formé en acier inoxydable traité, tel que l'acier connu sous la dénomination commerciale 12R10.

Le ressort de torsion 42 présente une raideur choisie de telle sorte qu'il puisse déplacer spontanément la couronne mobile 35 (et donc de l'arbre 40 de sortie porté par la couronne mobile 35) lorsque le couple moteur du moteur électrique 10 est nul. Ainsi, l'arbre de sortie 40 est déplacé spontanément dans une position prédéterminée lorsque le moteur 10 n'est plus alimenté en courant électrique, cette position prédéterminée étant définie par la position au repos du ressort de torsion 42.

La figure 6 illustre une variante de réalisation de l'actionneur selon l'invention dans laquelle l'actionneur est équipé d'un deuxième moteur électrique 12.

Dans le mode de réalisation de la figure 6, les arbres de moteurs électriques portent chacun une vis sans fin qui fait office de pignon moteur. La vis sans fin du premier moteur électrique 10 est engrenée dans la roue dentée 21 et la vis sans fin du deuxième moteur électrique 12 est engrenée dans une roue dentée 23. Cette roue dentée 23 est configurée pour pouvoir entrainer le deuxième étage de réduction décrit précédemment par le biais d'une noix en croix portant un pignon qui fait office de pignon solaire 22. Ce mode de réalisation particulier permet de former deux modes de fonctionnement (selon le moteur qui assure l'entrainement du réducteur) et de bénéficier d'une réduction différente sur chaque mode. En outre, le pignon solidaire de la roue dentée 21 est en prise avec un ou plusieurs pignons solidaires de la roue dentée 23 de telle sorte que l'activation du premier mode de fonctionnement (c'est-à-dire le mode initié par le moteur électrique 10) permet d'entrainer l'arbre de sortie par la succession des engrènements suivants : la roue dentée 21 entraine son pignon solidaire, engrené aux pignons solidaires de la roue dentée 23, qui entraine le deuxième étage de réduction par la noix en croix, qui entraine le pignon solaire 22, engrené aux satellites qui provoquent la rotation de la couronne mobile et donc de l'arbre de sortie. Lorsque le deuxième mode de fonctionnement est sélectionné (c'est-à-dire le mode initié par le moteur électrique 12), le déplacement de l'arbre de sortie est assuré par la même succession d'engrènements à la différence près que le moteur électrique 12 entraine directement la roue dentée 23.

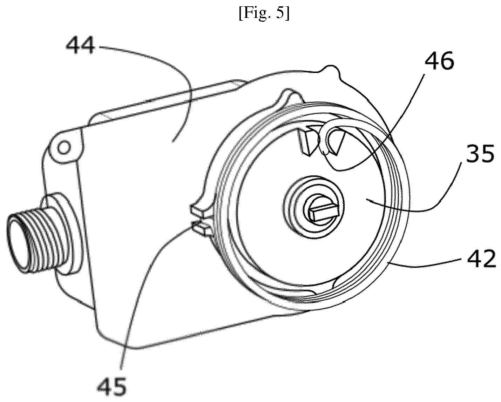

L'actionneur selon l'invention comprend également une carte électronique de commande équipée d'au moins un port d'entrée destiné à recevoir des données de pilotage de l'équipement. Cette carte n'est pas représentée sur les figures et est logée dans le carter 44 représenté sur la figure 5. Cette carte électronique embarque un logiciel configuré pour pouvoir déterminer des instructions de commande du moteur électrique à partir de données reçues sur son port d'entrée.

Le logiciel est configuré pour adapter le contrôle du moteur électrique (ou des moteurs électriques dans le cas d'un actionneur à deux modes tel qu'illustré sur la figure 6) au type d'équipement piloté par l'actionneur.

Selon une variante de réalisation, la carte électronique n'est pas fixée à la structure du carter du boitier électronique, mais uniquement fixé par les soudures des broches du connecteur avion par lequel la carte peut recevoir des données de pilotage. Ce mode de fixation facilite son installation.

## Revendications

1. Actionneur d'un équipement électrique de régulation d'un flux de fluide dans une conduite, du type vanne de régulation, équipé d'un organe de régulation, du type papillon, dont la position au sein de la conduite détermine au moins un paramètre du flux de fluide circulant d'amont en aval de l'organe de régulation, ledit actionneur comprenant un carter (44) et un moteur électrique (10) muni d'un arbre moteur adapté pour être mis en rotation lors de l'alimentation du moteur (10) en énergie électrique,
ledit actionneur étant **caractérisé en ce qu'**il comprend en outre :
- un réducteur réversible épicycloïdal concentrique logé dans ledit carter (44) et relié mécaniquement audit arbre moteur et comprenant un premier étage de réduction comprenant un pignon solaire (22) solidaire d'une roue dentée (21) entrainée en rotation par ledit arbre moteur et engrenant un deuxième étage de réduction comprenant au moins un satellite (31, 32, 33) à double dentures externes superposées, dites respectivement denture haute (31a) et denture basse (31b), ladite denture haute (31a) de chaque satellite étant engrenée par ledit pignon solaire (22) et en prise avec une couronne fixe (34) à denture interne solidaire dudit carter (44) et ladite denture basse (31b) de chaque satellite étant en prise avec une couronne mobile (35) à denture interne solidaire d'un arbre de sortie (40), relié mécaniquement audit organe de régulation,
- un ressort de torsion (42) concentrique agencé autour de ladite couronne mobile (35), relié mécaniquement au carter (44) et à la couronne mobile (35), et configuré pour pouvoir entrainer spontanément le déplacement de ladite couronne mobile (35) et dudit arbre de sortie (40) dans une position prédéterminée en cas de perte d'alimentation électrique dudit moteur électrique (10).

2. Actionneur selon la revendication 1, **caractérisé en ce que** ledit deuxième étage de réduction comprend trois satellites (31, 32, 33) à double dentures superposées dont les dentures hautes sont engrenées par ledit pignon solaire (22) dudit premier étage de réduction.

3. Actionneur selon la revendication 2, **caractérisé en ce que** ledit réducteur comprend en outre un pignon solaire libre (37) en prise avec les dentures basses (31b) des satellites de manière à pouvoir maintenir la position engrenée des trois satellites dans ladite couronne mobile (35).

4. Actionneur selon l'une des revendications 1 à 3, **caractérisé en ce que** ledit moteur électrique (10) comprend une vis sans fin formée par une partie de l'arbre moteur, engrenée dans ladite roue dentée (21) dudit premier étage de réduction.

5. Actionneur selon l'une des revendications 1 à 4, **caractérisé en ce qu'**il comprend en outre un deuxième moteur (12) électrique et **en ce que** ledit premier étage de réduction comprend une deuxième roue dentée (23) portant au moins un pignon en prise avec ledit pignon solaire, ladite roue étant entrainée en rotation par ledit deuxième moteur électrique pour former un deuxième mode de réduction.

6. Actionneur selon l'une des revendications 1 à 5, **caractérisé en ce qu'**il comprend en outre :
- une carte électronique de commande équipée d'au moins un port d'entrée destiné à recevoir des données de pilotage dudit équipement,
- un logiciel embarqué sur ladite carte électronique de commande et configuré pour pouvoir déterminer des instructions de commande du moteur électrique (10, 12) à partir de données reçues sur ledit port d'entrée.

7. Équipement électrique de régulation d'un flux de fluide dans une conduite, du type vanne de régulation, **caractérisé en ce qu'**il comprend un actionneur selon l'une des revendications 1 à 6.
